# EUROPEAN PATENT APPLICATION

(11) **EP 4 790 880 A1**
(43) Date of publication of application: **12.08.2026**
(21) Application number: 25305172.6
(22) Date of filing: 06.02.2025
(51) Int. Cl.: H02K 1/32, H02K 5/18, H02K 5/20, H02K 9/10, H02K 9/19

(54) **A TRACTION SYSTEM COMPRISING AN ELECTRIC MOTOR AND AN OUTSIDE LIQUID-AIR HEAT EXCHANGER FOR COOLING THE ROTOR**

(71) Applicant: ALSTOM Holdings, 93400 Saint-Ouen-sur-Seine (FR)
(72) Inventor: BOUALEM, Benali, 25660 Saone (FR)
(74) Representative: Plasseraud IP

(57) **Abstract**

A traction system for a railway vehicle, comprising:
- an electric motor (14) comprising a housing (20) including a peripheral part (40) in thermal contact with the stator, the motor defining two chambers (36, 38), the rotor defining a plurality of air passages (58) between the two chambers, the peripheral part defining a first liquid circuit (48) receiving a first flow of cooling liquid (32) intended to be heated by the stator,
- a heat exchanger (22) outside of the housing, with an air inlet (64) in fluid communication with one of the two chambers, an air outlet (66) in fluid communication with the other one, and a second liquid circuit (68) receiving a second flow of cooling liquid (34), the air passages, the two chambers and the heat exchanger defining an air loop (78) for cooling the rotor, the heat exchanger performing a heat exchange between the air loop and the second flow of cooling liquid,
- a fan (24) for circulating air in the air loop.

## Description

### FIELD

The present invention deals with a traction system for a railway vehicle, comprising an electric motor comprising a stator, a rotor adapted for rotating with respect to the stator about an axis, and a housing surrounding the stator, the housing, the rotor and the stator defining two chambers axially opposite each other.

The invention also deals with a railway vehicle including such a traction system, and with a traction process using such a traction system or such a railway vehicle.

### BACKGROUND

In such a traction system, the motor, when in operation, produces heat. As the motor is enclosed within the housing, the heat needs to be recovered and released outside of the housing.

One known solution consists in using a cooling liquid that is circulated in a peripheral part of the housing in thermal contact with the stator. Heat from the stator is transferred to the cooling liquid via the peripheral part and then evacuated.

For cooling the rotor, an internal air circulation may be created using a fan fixed to the rotor or to the motor shaft in one of the two chambers. The air passes from one chamber to the other via a first plurality of axial passages defined between the stator and the peripheral part of the housing, and comes back to said one chamber via a second plurality of axial passages defined by the rotor.

The air receives heat from the rotor in the second plurality of axial passages, and the heat is transferred to the cooling liquid via the peripheral part when the air circulates in the first plurality of axial passages.

This solution is satisfactory, because the stator and the rotor are cooled while being enclosed in the housing, but also has limits.

An objective of the invention is thus to provide a traction system improving the cooling efficiency, particularly of the stator, without degrading rotor cooling.

### SUMMARY OF THE INVENTION

To this end, the invention proposes a traction system for a railway vehicle comprising:
- an electric motor comprising a stator, a rotor adapted for rotating with respect to the stator about an axis, and a housing including a peripheral part surrounding the stator about the axis, the peripheral part being in thermal contact with the stator for receiving heat from the stator, the housing, the rotor and the stator defining two chambers axially opposite each other, the rotor defining a plurality of air passages between the two chambers, the peripheral part defining a first liquid circuit configured for receiving a first flow of cooling liquid intended to be heated by said heat received from the stator,
- a heat exchanger located outside of the housing, and having an air inlet in fluid communication with one of the two chambers an air outlet in fluid communication with the other of the two chambers, and a second liquid circuit configured for receiving a second flow of cooling liquid, the air passages, the two chambers and the heat exchanger defining an air loop adapted for cooling the rotor, the heat exchanger being adapted for performing a heat exchange between air of the air loop and the second flow of cooling liquid, and
- a fan for circulating air in the air loop.

In other embodiments, the traction system may comprise one or several of the following features, taken in isolation or any technically feasible combination:
- the stator and the peripheral part are connected to each other in such a manner that the stator and the peripheral part do not define air passages between themselves that would allow air from the air loop to by-pass the heat exchanger;
- the heat exchanger comprises an envelope defining an internal volume, and a plurality of tubes extending in the internal volume along a liquid circulation direction and adapted for receiving the second flow of cooling liquid, the envelope and the tubes defining a portion of the air loop extending between the air inlet and the air outlet;
- the envelope has a tubular shape;
- the liquid circulation direction is substantially parallel to the axis;
- the envelope forms external fins intended to extend parallel to a longitudinal direction of the vehicle in which the vehicle is intended to move;
- the axis is substantially orthogonal to the longitudinal direction;
- the heat exchanger comprises a plurality of internal walls extending in the internal volume, the internal walls being successive along the liquid circulation direction, and each of the walls being crossed by some of the tubes, each of the walls partially closing said portion of the air loop in the liquid circulation direction in order to define a zig-zag air path in said portion;
- the air inlet and the air outlet are located in two opposite extremities of the heat exchanger along a direction;
- the air inlet and the air outlet are respectively aligned with the two chambers respectively along two radial directions with respect to the axis, the two radial directions being coplanar, the air inlet and the air outlet being on a same side of the axis along the two radial directions;
- the traction system comprises a cooling liquid source adapted for providing the first flow of cooling liquid and the second flow of cooling liquid;
- the first liquid circuit and the second liquid circuit are connected in parallel to each other to the cooling liquid source to receive the first flow of cooling liquid and the second flow of cooling liquid respectively; and
- the first liquid circuit and the second liquid circuit are connected in series to each other and to the cooling liquid source, the first flow of cooling liquid being intended to exit the first liquid circuit in order to form the second flow of cooling liquid, or the second flow of cooling liquid being intended to exit the second liquid circuit in order to form the first flow of cooling liquid.

The invention also proposes a railway vehicle comprising a traction system as described above.

The invention proposes a traction process comprising the following steps:
- obtaining a traction system as described above, or a railway vehicle as described above,
- rotating the rotor with respect to the stator about the axis, the peripheral part receiving heat from the stator,
- receiving, by the first liquid circuit, the first flow of cooling liquid, the first flow of cooling liquid being heated by said heat received from the stator,
- receiving, by the second liquid circuit, the second flow of cooling liquid,
- cooling the rotor by the air loop, the heat exchanger performing a heat exchange between air of the air loop and the second flow of cooling liquid, and
- circulating air in the air loop using the fan.

### BRIEF DESCRIPTION OF THE DRAWINGS

The disclosure and its advantages will be better understood upon reading the following description, given solely by way of example and with reference to the appended drawing, in which:
- Figure 1 is a schematic view representing a railway vehicle according to the invention, and of another railway vehicle according a variant of the invention,
- Figure 2 is a schematic partial view of the electric motor and the heat exchanger of the traction system of the railway vehicles shown in Figure 1, in cross-section along a radial half-plane,

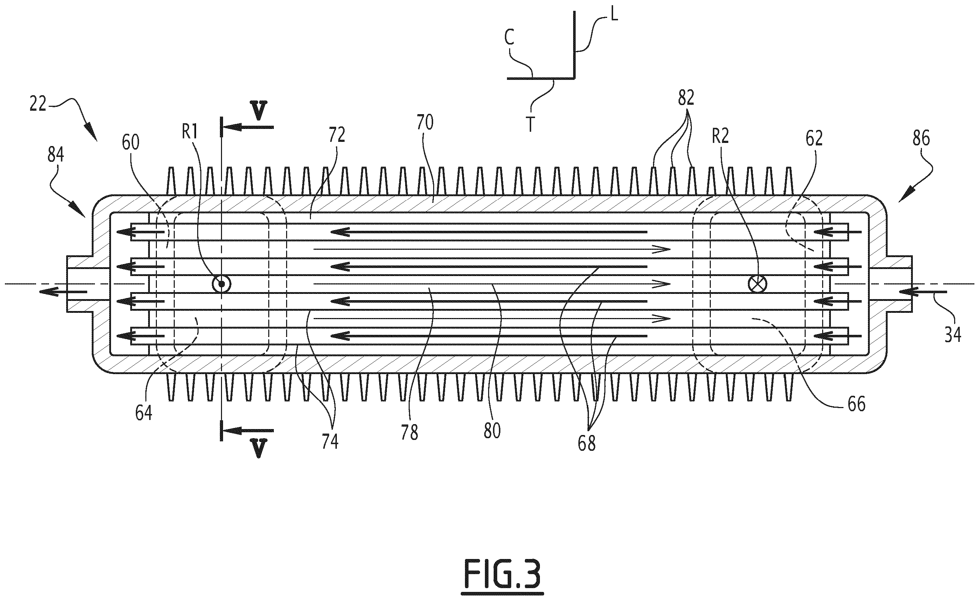

- Figure 3 is a view of the heat exchanger shown in Figures 1 and 2, in cross-section along a plane parallel to the axis of the electric motor,
- Figure 4 is a view of a heat exchanger according to a variant of the heat exchanger shown in Figure 3, and

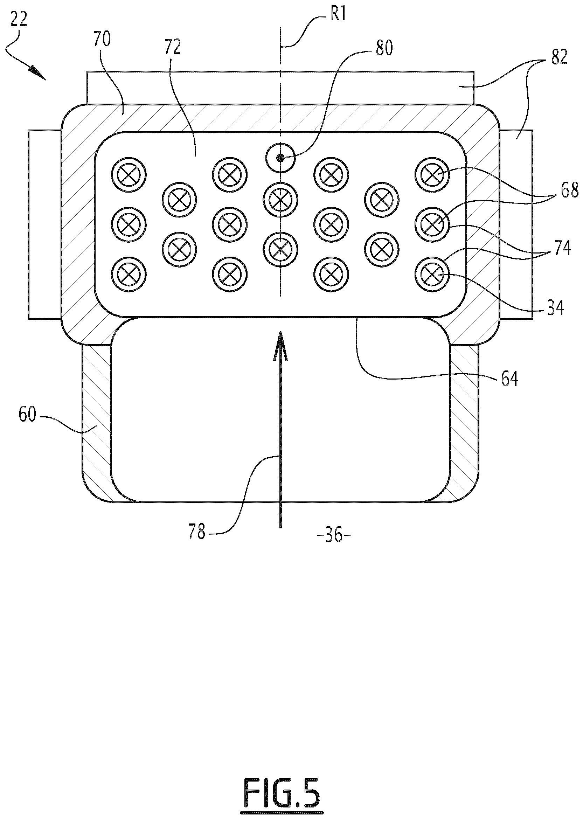

- Figure 5 is a view of the heat exchanger shown in Figures 1 to 3, in cross-section along a plane perpendicular to the axis of the electric motor.

### DETAILED DESCRIPTION

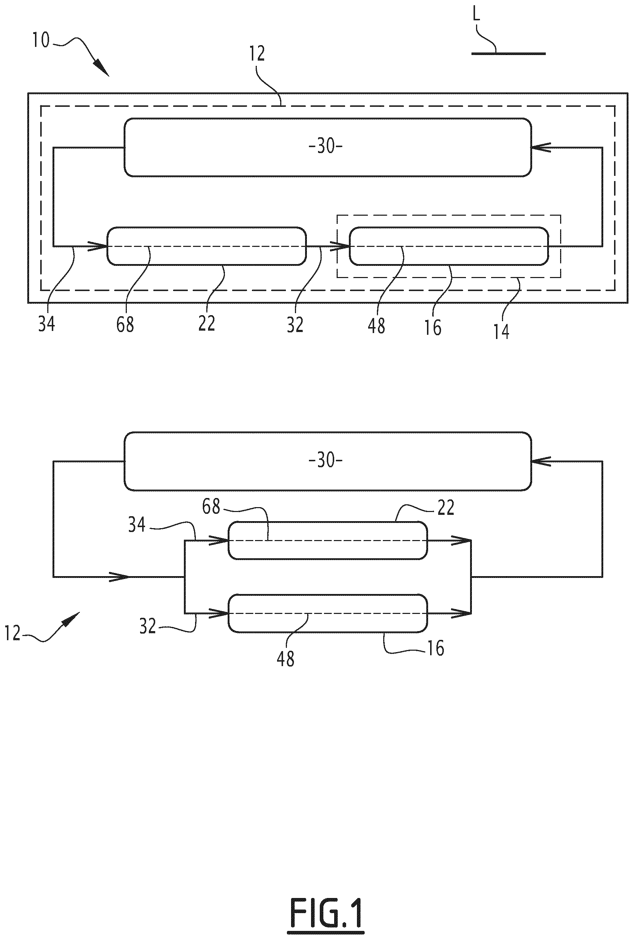

With reference to Figure 1, a railway vehicle 10 according to the invention will be described.

The vehicle 10 comprises a traction system 12 and is adapted for moving along a longitudinal direction L.

The traction system 12 comprises an electric motor 14 comprising a stator 16, a rotor 18 adapted for rotating with respect to the stator about an axis X, and a housing 20. The traction system 12 comprises a heat exchanger 22 located outside of the housing, and a fan 24 for example fixed to a shaft 26 of the electric motor within an internal volume 28 defined by the housing.

The traction system 12 advantageously comprises a cooling liquid source 30 adapted for providing a first flow of cooling liquid 32 and a second flow of cooling liquid 34.

The axis X is for example substantially orthogonal to the longitudinal direction L. "Substantially", when used for an orientation, for example means the strict orientation +/-5° in the present document.

The housing 20, the rotor 18 and the stator 16 define two chambers 36, 38 axially opposite each other.

The housing 20 includes a peripheral part 40 surrounding the stator 16 about the axis X, and advantageously two bearing plates 42, 44 for example extending perpendicularly to the shaft 26 on both sides of the peripheral part along the axis X.

The stator 16 for example comprises one or several winding(s) 45 facing the rotor 18 radially.

The peripheral part 40 for example has a cylindrical shape centered on the axis X. The peripheral part 40 is in thermal contact with the stator 16 for receiving heat from the stator.

Thermal contact between the peripheral part 40 and the stator 16 is ensured over a contact surface 46 of the stator 16 advantageously continuous around the axis X. Preferably, the stator 16 and the peripheral part 40 are connected to each other in such a manner that the stator and the peripheral part do not define air passages between themselves that would allow air to pass from one of the two chambers 36, 38 to the other, at least not a significant amount of air.

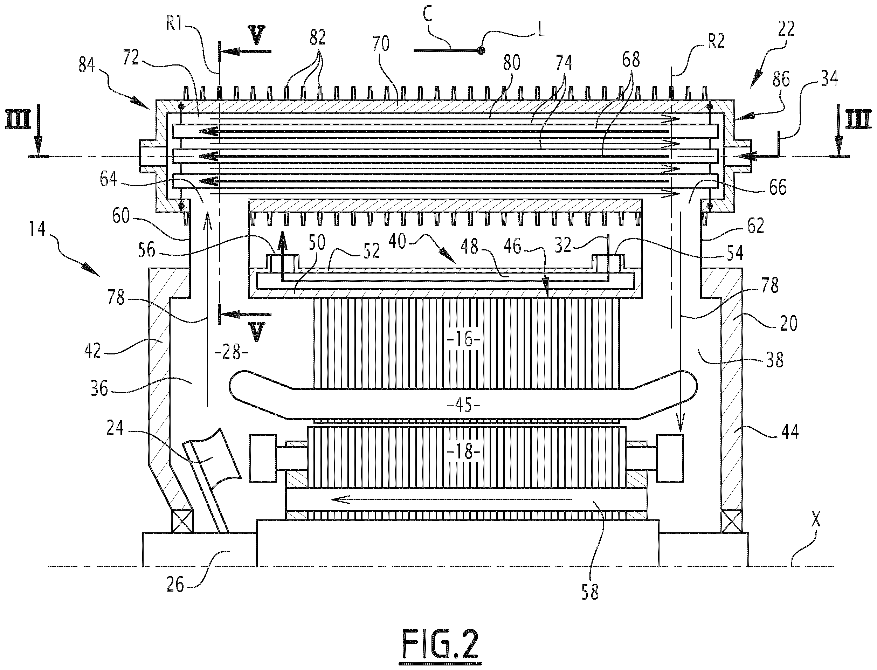

The peripheral part 40 defines a first liquid circuit 48 configured for receiving the first flow of cooling liquid 32, the first flow of cooling liquid being intended to be heated by the heat received from the stator 16. For example, the peripheral part 40 has two walls 50, 52 defining an internal path for the first flow of cooling liquid 32, from an inlet 54 to an outlet 56, the path extending both axially and around the axis X.The rotor 18 defines a plurality of air passages 58 (of which only one is shown in figure 2) between the two chambers 36, 38, for example parallel to the axis X.

The heat exchanger 22 is advantageously fixed to the housing 20 by two air ducts 60, 62. The heat exchanger 22 has an air inlet 64 in fluid communication with one of the two chambers 36, 38, and an air outlet 66 in fluid communication with the other of the two chambers, for example via the two ducts 60, 62 respectively.

The heat exchanger 22 comprises a second liquid circuit 68 configured for receiving the second flow of cooling liquid 34.

The heat exchanger 22 for example comprises an envelope 70 defining an internal volume 72, and a plurality of tubes 74 extending in the internal volume 72 along a liquid circulation direction C and adapted for receiving the second flow of cooling liquid 34.

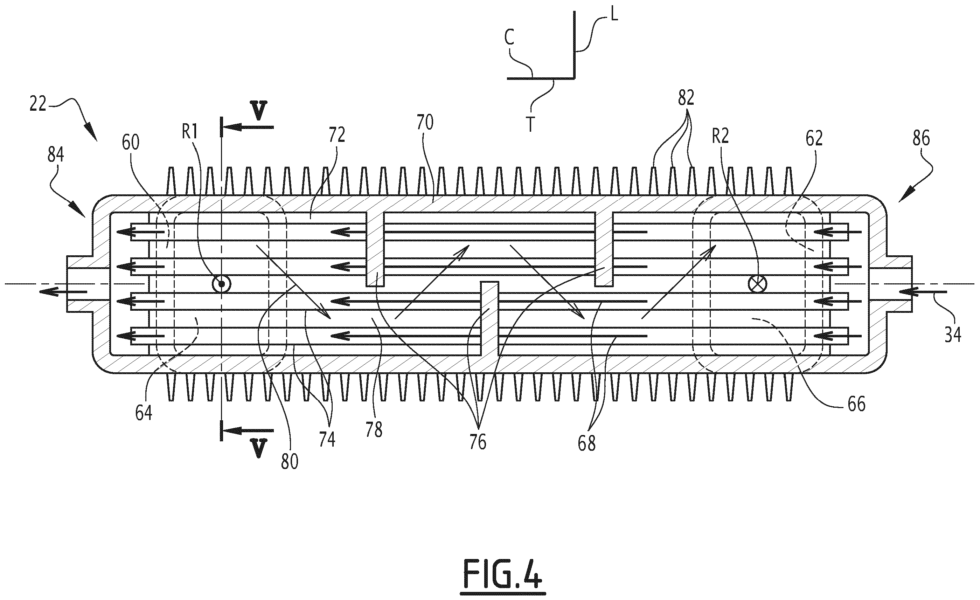

In a variant shown in Figure 4, the heat exchanger 22 advantageously comprises a plurality of internal walls 76 extending in the internal volume, the internal walls being successive along the liquid circulation direction C.

The air passages 58, the two chambers 36, 38 and the heat exchanger 22 define an air loop 78 adapted for cooling the rotor 18, the heat exchanger 22 being adapted for performing a heat exchange between air of the air loop 78 and the second flow of cooling liquid 34.

The fan 24 is adapted for circulating air in the air loop 78. The fan 24 for example extends in one of the two chambers 36, 38.

The envelope 70 and the tubes 74 define a portion 80 of the air loop 78 extending between the air inlet 64 and the air outlet 66. The envelope 70 for example has a tubular shape.

The envelope 70 advantageously forms external fins 82 extending parallel to the longitudinal direction L.

The liquid circulation direction C is for example substantially parallel to the axis X, hence orthogonal to the longitudinal direction L in the example.

Each of the walls 76 is crossed by some of the tubes 74, and partially closes the portion 80 of the air loop 78 in the liquid circulation direction C in order to define a zig-zag air path in said portion.

The tubes 74 may have a circular or square section for example.

The air inlet 64 and the air outlet 66 are advantageously located in two opposite extremities 84, 86 of the heat exchanger 22 along a direction T which is in the example parallel to the liquid circulation direction C. Advantageously, the air inlet 64 and the air outlet 66 are respectively aligned with the two chambers 36, 38 respectively along two radial directions R1, R2 with respect to the axis X.

The two radial directions R1, R2 are for example coplanar, the air inlet 64 and the air outlet 66 being on a same side of the axis X along the two radial directions R1, R2.

In the example the two ducts 60, 62 extends along the two radial directions R1, R2 respectively.

As symbolized in the upper part of Figure 1, the first liquid circuit 48 and the second liquid circuit 68 are connected in series to each other and to the cooling liquid source 30. The second flow of cooling liquid 34 exits the second liquid circuit 68 in order to form the first flow of cooling liquid 32. This reduces pressure drops in the cooling liquid.

As a variant (not shown), the first flow of cooling liquid 32 exits the first liquid circuit 48 in order to form the second flow of cooling liquid 34 entering the second liquid circuit 68.

In a variant shown in the lower part of Figure 1, the first liquid circuit 48 and the second liquid circuit 68 are connected in parallel to each other to the cooling liquid source 30 to receive the first flow of cooling liquid 32 and the second flow of cooling liquid 34 respectively. This optimizes the cooling liquid temperature at the inlet 54 of the first liquid circuit 48 and at the inlet of the second liquid circuit 64.

The operation of the vehicle 10 will now be briefly described, which illustrates a traction process according to the invention.

The rotor 18 is rotated with respect to the stator 16 about the axis X, which provides mechanical power to the shaft 26. The mechanical power is used to move the vehicle 10.

The peripheral part 40 receives heat from the stator 16, which cools the stator.

The first flow of cooling liquid 32 is received by the first liquid circuit 48 and is heated by said heat received from the stator 16.

The second flow of cooling liquid 34 is received by the second liquid circuit 68.

The fan 24 circulates air in the air loop 78. The rotor 18 is cooled by the air loop 78. The heat exchanger 22 performs a heat exchange between air of the air loop 78 and the second flow of cooling liquid 34. More precisely, air circulating in the passages 58 is heated, and then cooled in the heat exchanger 22 against the first flow of cooling liquid 34. Once cooled, the air circulates again in the passages 58.

Advantageously, the second flow of cooling liquid 34 and air circulate in opposite senses along the liquid circulation direction C.

In the example, the second flow of cooling liquid 34 is formed by the first flow of cooling liquid 32 exiting the heat exchanger 22. The second flow of cooling liquid 32, after passing in the peripheral part 40 returns to the cooling liquid source 30 for being cooled.

Thanks to the above described features, the stator 16 is in better thermal contact with the peripheral part 40 of housing 20, which enables better cooling of the stator 16. The rotor 18 is cooled by the loop of air 78, which is efficiently cooled in the heat exchanger 22.

In the example, no air passages are needed between the peripheral part 40 and the stator 16 for cooling the loop of air 78, which improves the thermal contact between the stator 16 and the peripheral part 40. This facilitates cooling the stator 16.

Overall, the traction system 12 has an improved cooling efficiency, particularly of the stator 16, without degrading rotor cooling.

Besides, the heat exchanger 22 may be rather compact, particularly thanks to its optional features. In particular, the fins 82, especially if they are parallel to the longitudinal direction L, increase the cooling of the air loop 78 in the heat exchanger 22 or reduce the need for cooling liquid, thanks to the apparent wind created by the vehicle movement.

The optional internal walls 76 also increase the cooling efficiency, by improving the heat exchange between the air and the tubes 74.

## Claims

1. A traction system (12) for a railway vehicle (10), comprising:
- an electric motor (14) comprising a stator (16), a rotor (18) adapted for rotating with respect to the stator about an axis (X), and a housing (20) including a peripheral part (40) surrounding the stator (16) about the axis (X), the peripheral part (40) being in thermal contact with the stator (16) for receiving heat from the stator (16), the housing (20), the rotor (18) and the stator (16) defining two chambers (36, 38) axially opposite each other, the rotor (18) defining a plurality of air passages (58) between the two chambers (36, 38), the peripheral part (40) defining a first liquid circuit (48) configured for receiving a first flow of cooling liquid (32) intended to be heated by said heat received from the stator (16),
- a heat exchanger (22) located outside of the housing (20), and having an air inlet (64) in fluid communication with one of the two chambers (36, 38), an air outlet (66) in fluid communication with the other of the two chambers (36, 38), and a second liquid circuit (68) configured for receiving a second flow of cooling liquid (34), the air passages (58), the two chambers (36, 38) and the heat exchanger (22) defining an air loop (78) adapted for cooling the rotor (18), the heat exchanger (22) being adapted for performing a heat exchange between air of the air loop (78) and the second flow of cooling liquid (34), and
- a fan (24) for circulating air in the air loop (78).

2. The traction system (12) according to claim 1, wherein the stator (16) and the peripheral part (40) are connected to each other in such a manner that the stator (16) and the peripheral part (40) do not define air passages between themselves that would allow air from the air loop to by-pass the heat exchanger (22).

3. The traction system (12) according to claim 1 or 2, wherein the heat exchanger (22) comprises:
- an envelope (70) defining an internal volume (72), and
- a plurality of tubes (74) extending in the internal volume (72) along a liquid circulation direction (C) and adapted for receiving the second flow of cooling liquid (34), the envelope (70) and the tubes (74) defining a portion (80) of the air loop (78) extending between the air inlet (64) and the air outlet (66).

4. The traction system (12) according to claim 3, wherein the envelope (70) has a tubular shape.

5. The traction system (12) according to claim 3, or 4 wherein the liquid circulation direction (C) is substantially parallel to the axis (X).

6. The traction system (12) according to any one of claims 3 to 5, wherein the envelope (70) forms external fins (82) intended to extend parallel to a longitudinal direction (L) of the vehicle (10) in which the vehicle (10) is intended to move.

7. The traction system (12) according to claim 6, wherein the axis (X) is substantially orthogonal to the longitudinal direction (L).

8. The traction system (12) according to any one of claims 3 to 7, wherein the heat exchanger (22) comprises a plurality of internal walls (76) extending in the internal volume (72), the internal walls (76) being successive along the liquid circulation direction (C), and each of the walls (76) being crossed by some of the tubes (74), each of the walls (76) partially closing said portion (80) of the air loop (78) in the liquid circulation direction (C) in order to define a zig-zag air path in said portion (80).

9. The traction system (12) according to any one of claims 1 to 8, wherein the air inlet (64) and the air outlet (66) are located in two opposite extremities (84, 86) of the heat exchanger (22) along a direction (T).

10. The traction system (12) according to any one of claims 1 to 9, wherein the air inlet (64) and the air outlet (66) are respectively aligned with the two chambers (36, 38) respectively along two radial directions (R1, R2) with respect to the axis (X), the two radial directions (R1, R2) being coplanar, the air inlet (64) and the air outlet (66) being on a same side of the axis (X) along the two radial directions (R1, R2).

11. The traction system (12) according to any one of claims 1 to 10, further comprising a cooling liquid source (30) adapted for providing the first flow of cooling liquid (32) and the second flow of cooling liquid (34).

12. The traction system (12) according to claim 11, wherein the first liquid circuit (48) and the second liquid circuit (68) are connected in parallel to each other to the cooling liquid source (30) to receive the first flow of cooling liquid (32) and the second flow of cooling liquid (34) respectively.

13. The traction system (12) according to claim 12, wherein the first liquid circuit (48) and the second liquid circuit (68) are connected in series to each other and to the cooling liquid source (30), the first flow of cooling liquid (32) being intended to exit the first liquid circuit (48) in order to form the second flow of cooling liquid (34), or the second flow of cooling liquid (34) being intended to exit the second liquid circuit (68) in order to form the first flow of cooling liquid (32).

14. A railway vehicle (10) comprising a traction system (12) as described by any one of claims 1 to 13.

15. A traction process comprising the following steps:
- obtaining a traction system (12) as described by any one of claims 1 to 13, or a railway vehicle (10) as described by claim 14,
- rotating the rotor (18) with respect to the stator (16) about the axis (X), the peripheral part (40) receiving heat from the stator (16),
- receiving, by the first liquid circuit (48), the first flow of cooling liquid (32), the first flow of cooling liquid (32) being heated by said heat received from the stator (16),
- receiving, by the second liquid circuit (68), the second flow of cooling liquid (34),
- cooling the rotor (18) by the air loop (78), the heat exchanger (22) performing a heat exchange between air of the air loop (78) and the second flow of cooling liquid (34), and
- circulating air in the air loop (78) using the fan (24).
